(19) Europäisches Patentamt

European Patent Office

Office européen des brevets

(11) **EP 4 531 207 B1**

(12) **FASCICULE DE BREVET EUROPEEN**

(45) Date de publication et mention
de la délivrance du brevet:
**08.10.2025  Bulletin 2025/41**

(21) Numéro de dépôt: **24202589.8**

(22) Date de dépôt: **25.09.2024**

(51) Classification Internationale des Brevets (IPC):
***H01Q 13/00*** *(2006.01)*      ***G01S 7/28*** *(2006.01)*

(52) Classification Coopérative des Brevets (CPC):
**H01Q 13/00; G01S 7/28**

(54) **PROCEDE DE GENERATION D'UNE ONDE A FORTE PUISSANCE AU MOYEN D'UN SYSTEME A CAVITE REVERBERANTE**

VERFAHREN ZUR ERZEUGUNG EINER HOCHLEISTUNGSWELLE MIT EINEM REVERBERTIERENDEN HOHLRAUMSYSTEM

METHOD FOR GENERATING A HIGH POWER WAVE USING A REVERBERATION CAVITY SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **28.09.2023  FR 2310338**

(43) Date de publication de la demande:
**02.04.2025  Bulletin 2025/14**

(73) Titulaire: **THALES**
**92190 Meudon (FR)**

(72) Inventeurs:
• **GARCIA, Pierre-Antoine**
**92622 GENNEVILLIERS Cedex (FR)**
• **DELAVEAU, François**
**92622 GENNEVILLIERS Cedex (FR)**
• **MURIS, Pierre**
**92622 GENNEVILLIERS Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**CN-A- 115 767 512     FR-A1- 2 985 384**

• **KHALEGHI A: "Time-Domain Measurement of Antenna Efficiency in Reverberation Chamber", IEEE TRANSACTIONS ON ANTENNAS AND PROPAGATION, IEEE, USA, vol. 57, no. 3, 1 March 2009 (2009-03-01), pages 817 - 821, XP011254669, ISSN: 0018-926X**

**EP 4 531 207 B1**

**Description**

L'invention porte sur un procédé de génération d'une onde à forte puissance au moyen d'un système à cavité réverbérante.

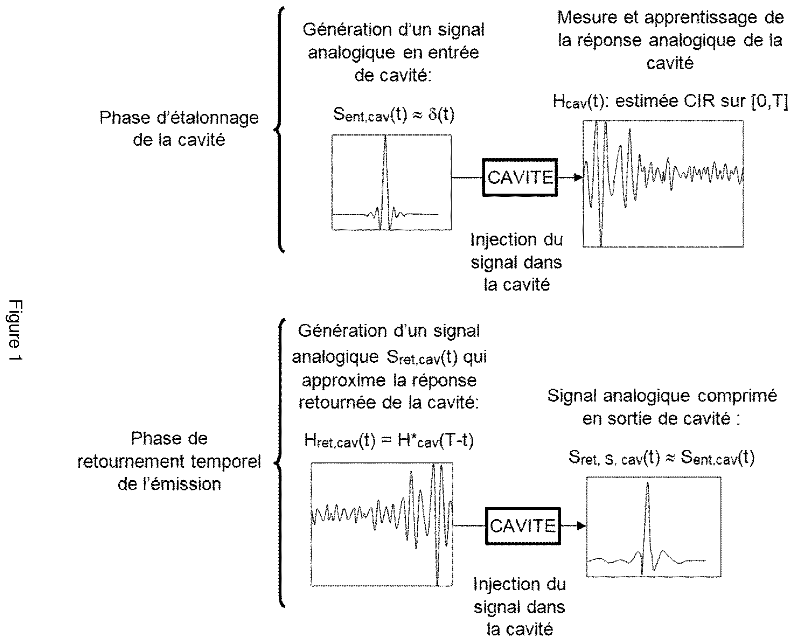

L'invention concerne la présente invention cherche à satisfaire le besoin de génération de signaux très impulsifs de forte puissance crête. Le principe est basé sur la technique de retournement temporel illustrée sur la [Fig.1].

Le principe de retournement temporel comprend une phase d'étalonnage de la cavité et une phase de retournement temporel d'un signal.

La phase d'étalonnage comprend une étape de génération d'un signal analogique impulsionnel $S_{ent,cav}(t)$, ou en d'autres termes de type distribution de Dirac, puis une étape d'injection de ce signal dans la cavité. Enfin, la phase de retournement temporel comprend une étape de mesure et d'apprentissage de la réponse analogique de la cavité $H_{cav}(t)$ (réponse impulsionnelle de canal estimée ou CIR pour "Channel Impulse Response" en langue anglaise).

On entend par signal de type distribution de Dirac d(t) en $t_0$ (souvent on prend par convention $t_0=0$) :

=> d(t) = 1 si t=t0 d(t) = 0 si t $\neq$ t0

=> dans le domaine spectral cela donne un spectre D(f) proportionnel à exp(-2ipf.$t_0$) et une DSP "constante" sur la bande considérée.

La phase de retournement temporel d'un signal comprend une étape de génération d'un signal analogique $S_{ret,cav}(t)$ qui approxime la réponse retournée $H_{ret,cav}(t)= H^*_{cav}(T-t)$, puis une étape d'injection de ce signal dans la cavité. Enfin, la phase de retournement temporel d'un signal comprend une étape de récupération d'un signal de sortie de la cavité $S_{ret,S,cav}(t)$ de la cavité compressé par la cavité, approximant un signal analogique d'entrée $S_{ent,cav}(t)$.

Les procédés de l'état de l'art ne traitent principalement que des signaux réels sur porteuse, notamment dans la génération de signal impulsionnel, cruciale pour le précédé. On a alors la simplification $H_{ret,cav,analog}(t)=H^*_{cav}(T-t)=H_{cav}(T-t)$).

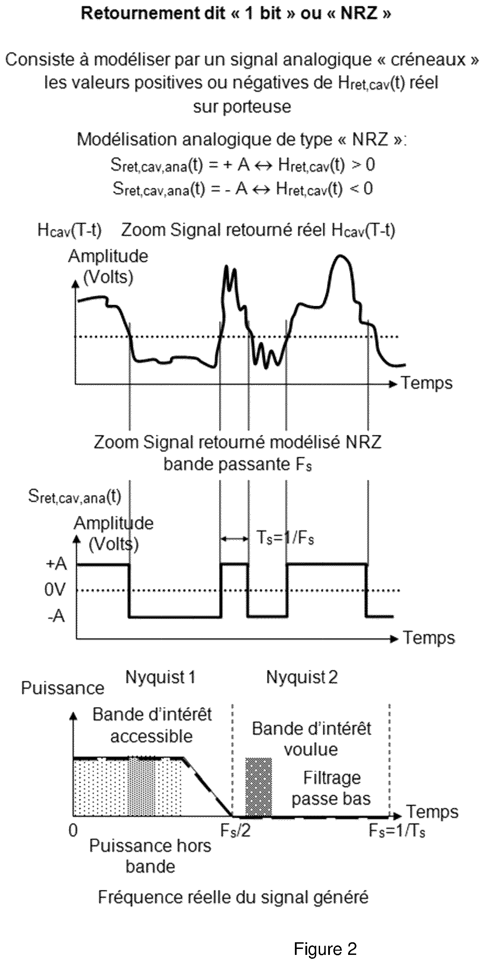

Dans ce cadre, un exemple de mise en œuvre de la phase de retournement temporel, comme illustré sur la [Fig.2] dit "retournement 1 bit". Il emploie une modélisation de type "Non-retour à Zéro" d'acronyme NRZ du signal retourné par un signal analogique $S_{ret,cav,ana}(t)$ de type créneau prenant des valeurs opposées +A ou -A selon la valeur positive ou négative du signal retourné $H_{cav}(T-t)$ (NB : les signaux sont réels, $H^*_{cav}(T-t)=H_{cav}(T-t)$).

Lorsque la bande passante du générateur est significativement plus importante que la bande d'intérêt propre à la bande passante de la cavité et sous réserve d'un filtrage passe bas convenable, le signal NRZ $S_{ret,cav,ana}(t)$ ainsi constitué des créneaux de durée Ts, et de valeur extrêmes opposées +A ou -A, approxime suffisamment correctement la réponse retournée $H_{cav}(T-t)$) pour permettre l'obtention de gains de retournement k atteignant typiquement 20.log10(k) =15 dB.

Plus précisément, l'état de l'art actuel consiste en une synthèse directe du signal retourné $H_{ret,cav}(t)$ ou d'une approximation $S_{ret,cav}(t)$ de $H_{ret,cav}(t)$ dont la mise en œuvre s'avère sous-optimale en raison des contraintes hardware, et ce quelle que soit la bande de fréquences de la cavité, et quelle que soit la bande de fréquence du signal visé en sortie de cavité.

Lorsqu'on veut mettre en œuvre une génération purement analogique comme sur la [Fig.1], on est limité par les dynamiques réduites des systèmes de génération filtrage et d'écrêtage qui réduisent en pratique à 15 dB les gains de retournement k atteignables.

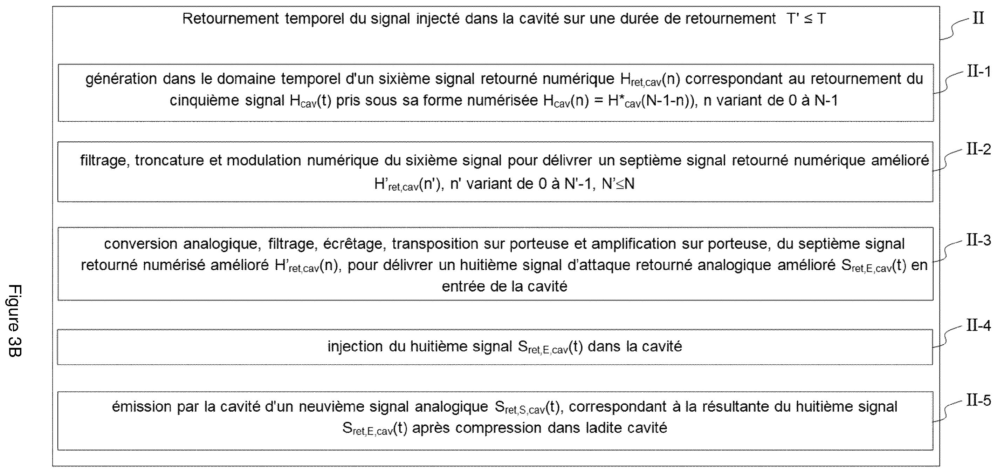

Lorsqu'on veut mettre en œuvre une génération et des traitements de filtrage numérique potentiellement plus performants et une conversion numérique-analogique avant amplification comme sur la [Fig.3B], cela implique de fortes contraintes sur la fréquence d'échantillonnage :

- Cela limite la fréquence maximale de $S_{ret,cav}(t)$ de $H_{ret,cav}(t)$ par la fréquence d'échantillonnage du convertisseur numérique analogique CNA.
   Par exemple : une synthèse directe limitée à 5 GSPS ne permet qu'une fréquence maximale de 2.5 GHz (condition de Shannon sur signaux réels: 2 x fréquence maximale $\leq$ fréquence d'échantillonnage) alors que la cavité ASTRE par exemple présente une bande passante de 1 GHz -10 GHz
- Cela limite les formes d'ondes utilisables pour l'approximation $S_{ret,E,cav}(t)$ de $H_{ret,E,cav}(t)$.

De ce fait, l'état de l'art couvre mal différents besoins nécessaires à l'amélioration du procédé de retournement temporel, tels que :

- la mesure de la réponse complète de la chaîne complète de transmission (amplificateur + cavité) ;
- l'approximation, la génération et l'amplification plus efficace du signal retourné $H_{ret,cav}(t)$ :
- pour mieux profiter de la bande passante de la cavité (sous-échantillonnage, transposition, etc...) ;
- pour soulager/améliorer l'emploi d'un amplificateur dans la chaîne de transmission (adaptation à la cavité) ;

2

- pour produire des signaux modulés sur porteuse en sortie de cavité ;
- le contrôle du signal en sortie de cavité $S_{ret,cav}(t)$ : raideur des fronts d'onde, durée et répétition des impulsions en sortie, modulation des impulsions de sortie, etc. Le document de l'art antérieur FR 2 985 384 divulgue l'utilisation d'impulsions longues de moindre puissance utilisant une cavité réverbérante pour la compression de signaux produisant une compression d'impulsion et ainsi un signal de forte puissance crête et de durée courte.

Un but de l'invention est d'améliorer la génération d'une onde à forte puissance au moyen d'un système de génération d'une onde à forte puissance à cavité réverbérante, en améliorant le retournement temporel réalisé par la cavité.

Il est proposé, selon un aspect de l'invention, un procédé de génération et d'émission d'un signal à forte puissance composé d'une pluralité de signaux de type distribution de Dirac, au moyen d'un système de génération et d'émission d'un signal à forte puissance muni d'une cavité réverbérante, et comprenant une phase d'étalonnage de la cavité sur une durée d'étalonnage et une phase de retournement temporel d'un signal avant injection dans la cavité, dans lequel :

la phase d'étalonnage de la cavité sur la durée d'étalonnage comprend, les étapes de :

- génération d'un premier signal numérique dans le domaine temporel de type distribution de Dirac ;

- conversion du premier signal en un deuxième signal analogique, puis transposition sur porteuse du deuxième signal en un troisième signal analogique, et amplification du troisième signal sur la bande de fréquences de la cavité en un quatrième signal analogique ;

- injection du quatrième signal dans la cavité ; et

- mesure, enregistrement sur la durée d'étalonnage et apprentissage d'un cinquième signal analogique correspondant à la réponse impulsionnelle de la cavité sur la durée d'étalonnage ; et numérisation de la réponse impulsionnelle sous forme d'échantillons à une fréquence d'échantillonnage respectant la condition de Shannon pour la bande passante de la cavité ;

la phase de retournement temporel du signal injecté dans la cavité sur une durée de retournement inférieure ou égale à la durée d'étalonnage comprend les étapes de :

- génération dans le domaine temporel d'un sixième signal retourné numérique correspondant au retournement du cinquième signal pris sous sa forme numérisée ;

- filtrage, troncature et modulation numérique du sixième signal pour délivrer un septième signal retourné numérique amélioré ;

- conversion analogique, filtrage, écrêtage, transposition sur porteuse et amplification sur porteuse, du septième signal retourné numérisé amélioré, pour délivrer un huitième signal d'attaque retourné analogique amélioré en entrée de la cavité ;

- injection du huitième signal dans la cavité ; et

- émission par la cavité d'un neuvième signal analogique, correspondant à la résultante du huitième signal après compression dans ladite cavité.

Selon un mode de réalisation, la phase d'étalonnage de la cavité comprend, en outre, une étape de mesure et apprentissage de la cavité dans le domaine fréquentiel :

- par injection en entrée d'une pluralité de signaux à fréquence pure émis sur une pluralité de porteuses séparées d'un pas en fréquence inférieur à l'inverse de la durée d'étalonnage sur laquelle est étalonnée la cavité, et en nombre suffisant pour couvrir une bande passante supérieure d'un facteur de sur-échantillonnage à la bande passante de la cavité ;

- par enregistrement des réponses en fréquence en sortie de la cavité pour chacun des signaux à fréquence pure sur les porteuses injectés en entrée de cavité.

On entend par signal à fréquence pure $f_0$, un signal complexe en bande de base : $s_C(t)=\exp(2i\pi f_0 t)$ ; correspondant à un signal réel : $s_R(t)=\cos(2i\pi f_0 t)$ Dans le domaine spectral cela correspond à une raie d'amplitude 1 en $f_0$ pour $S_c(t)$ ; à deux raies d'amplitude 1/2 en $f_0$ et $-f_0$ pour $S_R(t)$.

Selon un mode de réalisation, les phases d'étalonnage et de retournement temporel de la cavité portent en outre sur des éléments analogiques additionnels de la chaîne d'émission constituant avec la cavité un sous-ensemble analogique, dans lesquelles :

- la phase d'étalonnage prend en compte, en plus de la cavité, les éléments analogiques additionnels en amont et/ou en aval de la cavité pour la détermination des réponses impulsionnelles correspondant au cinquième signal et à sa forme numérisée du sous-ensemble analogique ;

- la phase de retournement prend en compte, en plus de la cavité, les éléments analogiques additionnels en amont et/ou en aval de la cavité pour la détermination du huitième signal injecté en entrée des éléments analogiques additionnels en amont du sous-ensemble analogique.

Dans un mode de réalisation, le cinquième signal est transposé et échantillonné en bande de base pour obtenir un signal complexe numérique échantillonné centré autour de la fréquence nulle, par utilisation d'une transformation de Hilbert, d'un filtrage passe-bas, puis d'un échantillonnage en bande de base à la fréquence d'échantillonnage respectant la condition de Shannon pour la bande passante de la cavité recentrée sur la fréquence nulle.

Selon un mode de réalisation, les signaux de réponse en fréquence en sortie du sous-ensemble analogique de la chaîne d'émission sont décalés en fréquence de la demi-somme des bornes de la bande de fréquences de la cavité, puis subissent une transformée de Fourier inverse pour obtenir la réponse impulsionnelle temporelle en bande de base numérisée sur le nombre d'échantillons.

Dans un mode de réalisation, la phase de retournement temporel d'un signal émis comprend l'étape de génération numérique du sixième signal retourné complexe en bande de base ou correspondant au retournement du cinquième signal complexe échantillonné centré autour de la fréquence nulle.

Selon un mode de réalisation, la phase de retournement temporel d'un signal émis comprend une étape de filtrage, troncature et modulation numérique du sixième signal retourné complexe en bande de base, pour délivrer un septième signal en bande de base retourné simplifié.

Dans un mode de réalisation, l'étape de filtrage, troncature et modulation numérique du sixième signal retourné complexe en bande de base pour délivrer un septième signal en bande de base retourné simplifié utilise une transformation à amplitude quasi constante, ou une modulation numérique à état de phase discrets de type BPSK ou QPSK.

Selon un mode de réalisation, l'étape de filtrage, troncature et modulation numérique du sixième signal retourné complexe en bande de base pour délivrer un septième signal en bande de base retourné simplifié utilise une transformation à amplitude strictement constante, ou une modulation numérique à état de phase continus MSK ou CPM à 2 ou 4 états.

L'invention sera mieux comprise à l'étude de quelques modes de réalisation décrits à titre d'exemples nullement limitatifs et illustrés par les dessins annexés sur lesquels :

[Fig.1] illustre schématiquement le principe est basé sur la technique de retournement temporel, selon l'état de la technique ;

[Fig.2] illustre schématiquement un exemple de mise en œuvre de la phase de retournement temporel, selon l'état de la technique ; et

[Fig.3A] et [Fig.3B] illustrent schématiquement un procédé selon un aspect de l'invention.

Sur l'ensemble des figures, les éléments ayant des références identiques sont similaires.

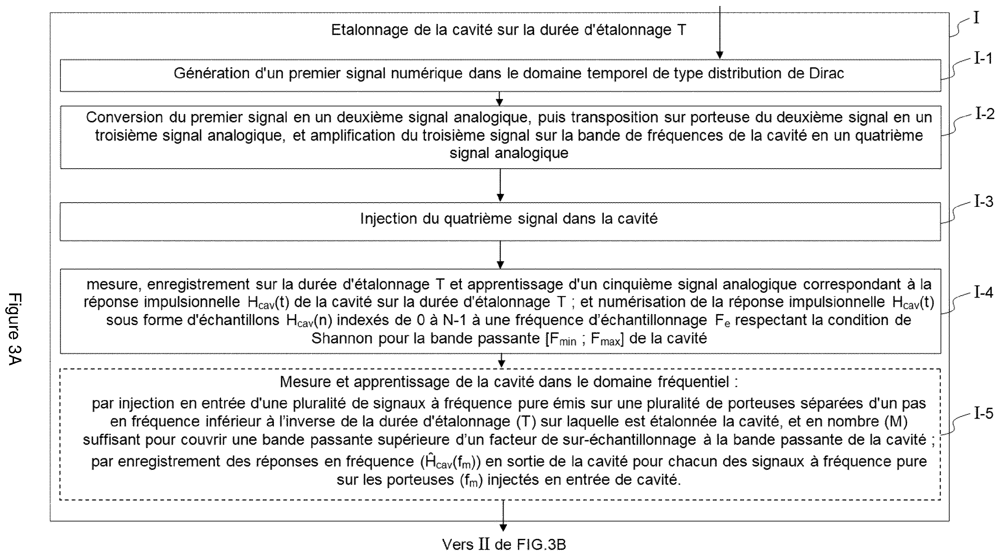

Les [Fig.3A] et [Fig.3B] illustrent schématiquement le procédé selon un aspect de l'invention.

Le procédé de génération et d'émission d'un signal à forte puissance composé d'une pluralité de signaux de type distribution de Dirac, au moyen d'un système de génération et d'émission d'un signal à forte puissance muni d'une cavité réverbérante, et comprenant une phase d'étalonnage I de la cavité sur une durée d'étalonnage T et une phase de retournement temporel II d'un signal avant injection dans la cavité, est tel que :

la phase d'étalonnage I de la cavité sur la durée d'étalonnage T comprend, les étapes de :

- génération I-1 d'un premier signal numérique d'excitation $S_{exc,cav}(n)$ dans le domaine temporel de type distribution de Dirac émis à l'instant $n_0$ ($S_{exc,cav}(n) \approx \delta(n-n_0)$) ;

- conversion du premier signal en un deuxième signal analogique proche d'une impulsion de Dirac à l'instant $t_0$, puis transposition I-2 sur porteuse du deuxième signal en un troisième signal analogique, et amplification du troisième signal sur la bande de fréquences de la cavité en un quatrième signal analogique ($S_{ent\_cav}(t)$) dont l'enveloppe est proche d'une impulsion de Dirac à l'instant $t_0$ ($\delta(t-t_0)$);

- injection I-3 du quatrième signal $S_{ent\_cav}(t)$ dans la cavité ; et

- mesure, enregistrement sur la durée d'étalonnage T et apprentissage d'un cinquième signal analogique correspondant à la réponse impulsionnelle $H_{cav}(t)$ de la cavité sur la durée d'étalonnage T ; et numérisation I-4 de la réponse impulsionnelle $H_{cav}(t)$ sous forme d'échantillons $H_{cav}(n)$ indexés de 0 à N-1 à une fréquence d'échantillonnage $F_e$ respectant la condition de Shannon pour la bande passante [$F_{min}$ ; $F_{max}$] de la cavité ;

la phase de retournement temporel II du signal injecté dans la cavité sur une durée de retournement T' inférieure ou égale à la durée d'étalonnage T comprend les étapes de :

- génération II-1 dans le domaine temporel d'un sixième signal retourné numérique $H_{ret,cav}(n)$ correspondant au retournement du cinquième signal $H_{cav}(t)$ pris sous sa forme numérisée $H_{cav}(n) = H^*_{cav}(N-1-n))$, n variant de 0 à N-1 ;

- filtrage, troncature et modulation numérique II-2 du sixième signal pour délivrer un septième signal retourné numérique amélioré $H'_{ret,cav}(n')$, n' variant de 0 à N'-1, N' ≤ N ;

- conversion analogique, filtrage, écrêtage, transposition sur porteuse et amplification sur porteuse II-3, du septième signal retourné numérisé amélioré $H'_{ret,cav}(n)$, pour délivrer un huitième signal d'attaque retourné analogique amélioré $S_{ret,E,cav}(t)$ en entrée de la cavité;

- injection II-4 du huitième signal $S_{ret,E,cav}(t)$ dans la cavité; ($S_{ret',S,cav}(t) \approx S_{ent,cav}(t)$, ce qui produit un facteur d'amplification du signal crête en sortie de cavité k, induisant un gain de compression en puissance $20.\log_{10}(k)$) ; et

- émission II-5 par la cavité d'un neuvième signal analogique $S_{ret,s,cav}(t)$, correspondant à la résultante du huitième signal $S_{ret,E,cav}(t)$ après compression dans ladite cavité.

Dans le domaine temporel, un mode particulièrement efficace de mise en œuvre de l'invention en phase I est la transposition et l'échantillonnage en bande de base de la réponse/signature $H_{cav}(t)$ de la cavité pour obtenir un signal complexe $H_{cav,BB}(n)$ (partie I et Q) échantillonné centré autour de la fréquence nulle. Cette transposition numérisation met en œuvre :

- une transformation de Hilbert de $H_{cav}(t)$ et un filtrage passe-bas (le signal réel de réponse/signature $H_{cav}(t)$ devient alors complexe (partie I et Q) : $H_{cav}(t) \rightarrow H_{cav,BB}(t)$) ;

- un échantillonnage en bande de base $H_{cav,BB}(t) \rightarrow H_{cav,BB}(n.T_e) = H_{cav,BB}(n)$ respectant la condition de Shannon (période d'échantillonnage $T_e$ vérifiant $1/T_e \geq F_{max,C,BB}$ : fréquence maximale du signal complexe en bande de base, durée $T= N.T_e$.

La présente invention permet notamment :

- soit, à largeur de bande fixée, de limiter la fréquence d'échantillonnage $F_e=1/T_e$,

- soit, à fréquence d'échantillonnage fixée $F_e=1/T_e$, d'augmenter la largeur de bande et la porteuse des signaux injecté dans la cavité pour viser des mesures de réponses de cavité et des générations d'impulsions de plus en plus brèves et en gamme de fréquence de plus en plus haute.

La phase d'étalonnage de la cavité I peut comprendre, en outre, une étape de mesure et apprentissage de la cavité dans le domaine fréquentiel (I-4a) :

- par injection en entrée d'une pluralité de signaux $\hat{S}_{ent,cav}(f,t)$ à fréquence pure émis sur une pluralité de porteuses séparées d'un pas en fréquence inférieur à l'inverse de la durée d'étalonnage T sur laquelle est étalonnée la cavité, et en nombre M suffisant pour couvrir une bande passante supérieure d'un facteur de sur-échantillonnage à la bande passante de la cavité ; spectralement, cela s'écrit dans le domaine complexe $\hat{S}_{ent,cav}(v) \approx \delta(v\text{-f})$) et cela correspond à l'émission d'un signal réel $\hat{S}_{ent,cav}(f)(t) \approx Re\{exp(2i\pi.f.t)\}$.

- par enregistrement des réponses en fréquence $\hat{H}_{cav}(f_m)$ en sortie de la cavité pour chacun des signaux à fréquence pure sur les porteuses $f_m$ injectés en entrée de cavité.

Dans le domaine fréquentiel, un mode particulièrement efficace de mise en œuvre de l'invention en phase I est constitué par les étapes suivantes :

- l'injection en entrée d'une pluralité de signaux $\hat{S}_{ent,cav}(f_m)(t) \approx Re\{exp(2i\pi.f_m.t)\}$ émis à fréquence pure $f_m$ sur une pluralité de M porteuses $f_m$ séparées du pas en fréquence $\delta f$ inférieur à l'inverse de la durée T supposée ou préalablement estimée de la réponse impulsionnelle de cavité $H_{cav}(t)$ ; l'ensemble des canaux de largeur $f_m \pm \delta f/2$ sur les fréquences porteuses $f_m$ couvrant une bande passante supérieure d'un facteur de suréchantillonnage $\kappa$ à celle de la cavité $[F_{min} ; F_{max}]$ ($f_m = F_{min} + m.\delta f$ avec m= 0,...,M-1 ; $M \geq \kappa.|F_{max}\text{-}F_{min}|/\delta f$ ; $\kappa \geq 1$) ;
- l'enregistrement numérique des réponses en fréquence $\hat{H}_{cav}(f_m)$ de la cavité en sortie pour chacun des signaux à fréquence pure sur les porteuses $f_m$ en entrée de cavité ;
- le décalage en fréquence de $-\Delta F=-(F_{min}+F_{max})/2$ pour centrer le spectre autour de la fréquence nulle ; et
- la transformée de Fourier inverse de la série des $\hat{H}_{cav}(f_m)$ m=0,...,M-1 associé à des filtrages convenables connus de l'homme de l'art pour obtenir la réponse impulsionnelle temporelle en bande de base numérisée $H_{cav,BB}(m)$ en sortie de la cavité sur le nombre d'échantillons M et la bande $\kappa.|F_{max}\text{-}F_{min}|$.

L'avantage de ce mode de mise en œuvre réside en particulier dans le fait de pouvoir utiliser les analyseurs de réseau à très large gamme de fréquence, pour obtenir in fine une estimation impulsionnelle de la cavité en bande de base avec des facteurs de sur-échantillonnage $\kappa$ importants.

$H_{cav}(n)$ et $\hat{H}_{cav}(f_n)$ sont alors directement ré-employables en phase II.

L'état de l'art précédemment mentionné décrit principalement des mises en œuvres des phases d'étalonnage de la cavité I et de retournement temporel II par des procédés analogiques, qui s'avèrent en pratique assez peu performants et limitent le gain de compression au plus à 20 dB.

L'invention permet d'améliorer très significativement ces performances en adaptant (pour le problème très particulier de la génération de formes d'ondes impulsives par retournement temporel) des techniques numériques spécifiquement adaptées pour améliorer l'ensemble des étapes de la phase I et de la phase II du procédé.

Les phases d'étalonnage I et de retournement temporel II de la cavité peuvent en outre porter sur des éléments analogiques additionnels de la chaîne d'émission constituant avec la cavité un sous-ensemble analogique, dans lesquelles :

- la phase d'étalonnage I prend en compte, en plus de la cavité, les éléments analogiques additionnels en amont et/ou en aval de la cavité pour la détermination des réponses impulsionnelles correspondant au cinquième signal $H_{cav}(t)$ et à sa forme numérisée $H_{cav}(n)$ du sous-ensemble analogique ;

- la phase de retournement II prend en compte, en plus de la cavité, les éléments analogiques additionnels en amont et/ou en aval de la cavité pour la détermination du huitième signal $S_{Ret,E,cav}(t)$ injecté en entrée des éléments analogiques additionnels en amont du sous-ensemble analogique.

Le cinquième signal ($H_{cav}(t)$ peut être transposé et échantillonné en bande de base pour obtenir un signal complexe numérique $H_{cav,BB}(n)$ échantillonné centré autour de la fréquence nulle, par utilisation d'une transformation de Hilbert, d'un filtrage passe-bas, puis d'un échantillonnage en bande de base à la fréquence d'échantillonnage Fe respectant la condition de Shannon pour la bande passante de la cavité recentrée sur la fréquence nulle.

Les signaux de réponse en fréquence $\hat{H}_{cav}(f_m)$ aux porteuses $f_m$ en sortie du sous-ensemble analogique de la chaîne d'émission peuvent être décalés en fréquence de la demi-somme des bornes de la bande de fréquences de la cavité, puis subir une transformée de Fourier inverse pour obtenir la réponse impulsionnelle temporelle en bande de base numérisée $H_{cav,BB}(m)$ sur le nombre d'échantillons M.

La phase de retournement temporel II d'un signal émis peut comprendre l'étape II-1 de génération numérique du sixième signal retourné complexe en bande de base $H_{ret,cav,BB}(n)$ ou $H_{ret,cav,BB}(m)$ correspondant au retournement du cinquième signal complexe $H_{cav,BB}(n)$, $H_{cav,BB}(m)$ échantillonné centré autour de la fréquence nulle.

La phase de retournement temporel II d'un signal émis peut comprendre une étape II-2 de filtrage, troncature et modulation numérique du sixième signal retourné complexe en bande de base $H_{ret,cav,BB}(n)$, $H_{ret,cav,BB}(m)$ pour délivrer un septième signal en bande de base retourné simplifié $H'_{ret,cav,BB}(n')$, $H'_{ret,cav,BB}(m')$.

L'étape II-2 de filtrage, troncature et modulation numérique du sixième signal retourné complexe en bande de base $H_{ret,cav,BB}(n)$ pour délivrer un septième signal en bande de base retourné simplifié $H'_{ret,cav,BB}(n)$ peut utiliser une transformation à amplitude quasi constante, ou une modulation numérique à état de phase discrets de type BPSK ou QPSK.

En variante, l'étape II-2 de filtrage, troncature et modulation numérique du sixième signal retourné complexe en bande de base $H_{ret,cav,BB}(n)$ pour délivrer un septième signal en bande de base retourné simplifié $H'_{ret,cav,BB}(n)$ peut utiliser une transformation à amplitude strictement constante, ou une modulation numérique à état de phase continus MSK ou CPM à 2 ou 4 états.

En d'autres termes, les étapes de la phase II de retournement sont comme suit.

La phase de génération II-1 effectue un réemploi direct des versions numérisées des réponses de la chaîne amplificateur et cavité issues de la phase d'étalonnage **I,** sur porteuse ou après filtrage en bande de base, pour construire le signal numérique retourné $H_{ret,cav}(n)$ par l'opération $H_{ret,cav}(n) = H^*_{cav}(N-1-n)$.

Un mode particulièrement efficace de mise en œuvre de l'invention en phase II à l'issue de la phase I incluant une transposition/numérisation en bande de base de la réponse/signature $H_{cav}(t)$ de la cavité produisant le signal complexe $H_{cav,BB}(n)$ échantillonné centré autour de la fréquence nulle, consiste en la génération en bande de base du signal retourné par l'opération $H_{ret,cav,BB}(n) = H^*_{cav,BB}(N-1-n)$.

L'étape II-2 de filtrage, troncature et modulation numérique des échantillons du sixième signal retourné $H_{ret,cav}(n)$ pour produire un septième signal approché simplifié $H'_{ret,cav}(n')$.

Ceci correspond à une approximation du signal retourné $H_{ret,cav}(n)$, n=0...N-1 par un signal simplifié $H'_{ret,cav}(n')$, n=0...N'-1 N' $\leq$ N

- qui favorise le contrôle de l'énergie du signal généré et de son PAPR ou "Peak to Average Power Ratio" en langue anglaise,
- qui vise aussi une moindre complexité de la génération et de l'amplification (par exemple une approximation par une modulation à amplitude constante permet de travailler dans les régimes de saturation des amplificateurs insérés dans la chaîne d'émission).

Ces filtrages, troncatures, et modulations numériques spécifiques à la présente invention sont rendues particulièrement efficaces sur le signal complexe en bande de base $H_{ret,cav,BB}(n)$, pour produire un signal approché simplifié $H'_{ret,cav,BB}(n)$ lui aussi en bande de base avant l'étape suivante de conversion analogique, transposition sur porteuse et amplification.

Des exemples possibles de modulation numérique des échantillons du signal retourné en bande de base sont les suivants :
Transformation $H_{ret,cav,BB}(n) \rightarrow H'_{ret,cav,BB}(n')$ à amplitude quasi constante (non strictement constante en raison du filtrage).

- Modulation BPSK d'amplitude A :
  pour tout n'=n, $H'_{ret,cav,BB}(n') = A.Signe\{Re[H_{ret,cav,BB}(n)]\}$. Ceci correspond à une mise en œuvre numérique de la modélisation 1 bits ou NRZ du signal retourné, telle qu'illustrée sur la [Fig.2] : on code dans la modulation BPSK à chaque échantillon n le demi plan correspondant au signe de la partie réelle de la réponse impulsionnelle (en bande de base) retournée de la cavité.
- Modulation QPSK d'amplitude A : pour tout n'=n, $H'_{ret,cav,BB}(n') = A.Signe\{Re[H_{ret,cav,BB}(n)]\} + A.i.Signe\{Im[H_{ret,cav,BB}(n)]\}$ On code dans la modulation QPSK à chaque échantillon n le quadrant correspondant aux signes de la partie réelle et de la partie imaginaire de la réponse impulsionnelle complexe (en bande de base) retournée de la cavité.
  Transformation Hret,cav,BB(n) $\rightarrow$ H'ret,cav,BB(n') à amplitude strictement constante (même avec filtrage) :
- Forçage amplitude A constante :

$$\text{pour tout } n'=N, \ H'_{ret,cav,BB}(n') = A.H_{ret,cav,BB}(n)/|H_{ret,cav,BB}(n)|$$

Modulation MSK, CPM 2 ou 4 états.

L'étape II-3 de conversion analogique du septième signal retourné simplifié $H'_{ret,cav}(n)$, filtrage et écrêtage, transposition et amplification sur porteuse, pour produire un signal d'attaque de la cavité $S_{ret,E,cav}(t)$ amélioré (II-3) en terme :

- d'énergie,
- de puissance crête (limitation du PAPR), et

- d'adaptation à la bande de la cavité.

Le signal sur porteuse $w_{0=}2\pi.f_0$ excitant la cavité s'écrit alors (hors filtrages et écrêtages éventuels) sous la forme suivante :

Pour n'= 0,...,N'-1 et t vérifiant (n'-1).$T_e \leq t \leq$ n'.$T_e$ ;

$$S_{ret,E,cav}(t)=Re[H'_{ret,cav,BB}(n'T_e)]*cos(w_0t)-Im[H'_{ret,cav,BB}(n'T_e)]*sin(w_0t)$$

L'étape II-4 réalise l'injection du huitième signal analogique retourné sur porteuse $S_{ret,E,cav}(t)$ dans la cavité.

Enfin, l'étape II-5 réalise la compression du huitième signal par la cavité et contrôle du neuvième signal compressé en sortie $S_{ret,S,cav}(t)$.

La présente invention présente les avantages suivants :

- Gestion améliorée le convertisseur numérique analogique CNA par échantillonnage en bande de base BB ;

- Aller au-delà de la limite de la théorie de Shannon (génération avec procédés Faster Than Nyquist utilisés en communication) ;

- Réduction des coûts de synthèse et numérisation/analyse des signaux par utilisation de cartes SDR ;

- Rapport poids/volume fortement réduit ;

- Réduction des contraintes sur l'amplificateur, rapport puissance crête/puissance moyenne fortement réduit, dynamique relâchée ;

- Meilleur contrôle global des formes d'ondes en sorties ;

- Formes d'ondes "arbitraires" en sortie par génération en série décalées dans le temps et modulation des signaux d'excitations $H'_{ret,cav}(n)$ dans le domaine numérique ou $S_{ret,E,cav}(t)$ dans le domaine analogique.


**Revendications**

**1.** Procédé de génération et d'émission d'un signal à forte puissance composé d'une pluralité de signaux de type distribution de Dirac, au moyen d'un système de génération et d'émission d'un signal à forte puissance muni d'une cavité réverbérante, et comprenant une phase d'étalonnage de la cavité sur une durée d'étalonnage (T) et une phase de retournement temporel d'un signal avant injection dans la cavité dans la cavité, dans lequel :

la phase d'étalonnage de la cavité (I) sur la durée d'étalonnage (T) comprend, les étapes de :

- génération d'un premier signal numérique dans le domaine temporel de type distribution de Dirac (I-1) ;
- conversion du premier signal en un deuxième signal analogique, puis transposition sur porteuse du deuxième signal en un troisième signal analogique, et amplification du troisième signal sur la bande de fréquences de la cavité en un quatrième signal analogique (I-2) ;
- injection du quatrième signal dans la cavité (I-3) ; et
- mesure, enregistrement sur la durée d'étalonnage (T) et apprentissage d'un cinquième signal analogique correspondant à la réponse impulsionnelle ($H_{cav}(t)$) de la cavité sur la durée d'étalonnage (T) ; et numérisation de la réponse impulsionnelle ($H_{cav}(t)$) sous forme d'échantillons ($H_{cav}(n)$) à une fréquence d'échantillonnage ($F_e$) respectant la condition de Shannon pour la bande passante ($[F_{min} ; F_{max}]$) de la cavité (I-4) ;

la phase de retournement temporel (II) du signal injecté dans la cavité sur une durée de retournement (T') inférieure ou égale à la durée d'étalonnage (T) comprend les étapes de :

- génération dans le domaine temporel d'un sixième signal retourné numérique ($H_{ret,cav}(n)$) correspondant au retournement du cinquième signal ($H_{cav}(t)$) pris sous sa forme numérisée ($H_{cav}(n)$) (11-1) ;
- filtrage, troncature et modulation numérique du sixième signal pour délivrer un septième signal retourné numérique amélioré ($H'_{ret,cav}(n')$) (II-2) ;

- conversion analogique, filtrage, écrêtage, transposition sur porteuse et amplification, du septième signal retourné numérisé amélioré ($H'_{ret,cav}(n)$), pour délivrer un huitième signal d'attaque retourné analogique amélioré ($S_{ret,E,cav}(t)$) en entrée de la cavité (II-3) ;
- injection du huitième signal ($S_{ret,E,cav}(t)$) dans la cavité (II-4) ; et
- émission par la cavité d'un neuvième signal analogique ($S_{ret,S,cav}(t)$), correspondant à la résultante du huitième signal ($S_{ret,E,cav}(t)$) après compression dans ladite cavité (II-5).

2. Procédé selon la revendication 1, dans lequel la phase d'étalonnage de la cavité (I) comprend, en outre, une étape de mesure et apprentissage de la cavité dans le domaine fréquentiel (I-4a) :

- par injection en entrée d'une pluralité de signaux à fréquence pure émis sur une pluralité de porteuses séparées d'un pas en fréquence inférieur à l'inverse de la durée d'étalonnage (T) sur laquelle est étalonnée la cavité, et en nombre (M) suffisant pour couvrir une bande passante supérieure d'un facteur de sur-échantillonnage à la bande passante de la cavité ;
- par enregistrement des réponses en fréquence ($\hat{H}_{cav}(f_m)$) en sortie de la cavité pour chacun des signaux à fréquence pure sur les porteuses ($f_m$) injectés en entrée de cavité.

3. Procédé selon l'une des revendications 1 ou 2 dans lequel les phases d'étalonnage (I) et de retournement temporel (II) de la cavité portent en outre sur des éléments analogiques additionnels de la chaîne d'émission constituant avec la cavité un sous-ensemble analogique, dans lesquelles :

- la phase d'étalonnage (I) prend en compte, en plus de la cavité, les éléments analogiques additionnels en amont et/ou en aval de la cavité pour la détermination des réponses impulsionnelles correspondant au cinquième signal ($H_{cav}(t)$) et à sa forme numérisée ($H_{cav}(n)$) du sous-ensemble analogique ;
- la phase de retournement (II) prend en compte, en plus de la cavité, les éléments analogiques additionnels en amont et/ou en aval de la cavité pour la détermination du huitième signal ($S_{ret,E,cav}(t)$) injecté en entrée des éléments analogiques additionnels en amont du sous-ensemble analogique.

4. Procédé selon l'une des revendications 1 à 3, dans lequel le cinquième signal (($H_{cav}(t)$) est transposé et échantillonné en bande de base pour obtenir un signal complexe numérique ($H_{cav,BB}(n)$) échantillonné centré autour de la fréquence nulle, par utilisation d'une transformation de Hilbert, d'un filtrage passe-bas, puis d'un échantillonnage en bande de base à la fréquence d'échantillonnage (Fe) respectant la condition de Shannon pour la bande passante de la cavité recentrée sur la fréquence nulle.

5. Procédé selon la revendication 3 ou 4, dans lequel les signaux de réponse en fréquence ($\hat{H}_{cav}(f_m)$) en sortie du sous-ensemble analogique de la chaîne d'émission sont décalés en fréquence de la demi-somme des bornes de la bande de fréquences de la cavité, puis subissent une transformée de Fourier inverse pour obtenir la réponse impulsionnelle temporelle en bande de base numérisée ($H_{cav,BB}(m)$) sur le nombre d'échantillons (M).

6. Procédé selon la revendication 4 ou 5, dans lequel la phase de retournement temporel (II) d'un signal émis comprend l'étape (II-1) de génération numérique du sixième signal retourné complexe en bande de base ($H_{ret,cav,BB}(n)$ ou $H_{ret,cav,BB}(m)$) correspondant au retournement du cinquième signal complexe ($H_{cav,BB}(n)$, $H_{cav,BB}(m)$) échantillonné centré autour de la fréquence nulle.

7. Procédé selon la revendication 6, dans lequel la phase de retournement temporel (II) d'un signal émis comprend une étape (II-2) de filtrage, troncature et modulation numérique du sixième signal retourné complexe en bande de base ($H_{ret,cav,BB}(n)$, $H_{ret,cav,BB}(m)$) pour délivrer un septième signal en bande de base retourné simplifié ($H'_{ret,cav,BB}(n')$, $H'_{ret,cav,BB}(m')$).

8. Procédé selon la revendication 7, dans lequel l'étape (II-2) de filtrage, troncature et modulation numérique du sixième signal retourné complexe en bande de base ($H_{ret,cav,BB}(n)$) pour délivrer un septième signal en bande de base retourné simplifié ($H'_{ret,cav,BB}(n)$) utilise une transformation à amplitude quasi constante, ou une modulation numérique à état de phase discrets de type BPSK ou QPSK.

9. Procédé selon la revendication 7, dans lequel l'étape (II-2) de filtrage, troncature et modulation numérique du sixième signal retourné complexe en bande de base ($H_{ret,cav,BB}(n)$) pour délivrer un septième signal en bande de base retourné simplifié ($H'_{ret,cav,BB}(n)$) utilise une transformation à amplitude strictement constante, ou une modulation numérique à état de phase continus MSK ou CPM à 2 ou 4 états.

**Patentansprüche**

1. Verfahren zum Erzeugen und Senden eines Hochleistungssignals, das aus einer Vielzahl von Signalen vom Typ Dirac-Verteilung zusammengesetzt ist, mittels eines Systems zum Erzeugen und Senden eines Hochleistungssignals, das mit einem widerhallenden Hohlraum ausgestattet ist, und das eine Kalibrierungsphase des Hohlraums über eine Kalibrierungsdauer (T) und eine Zeitumkehrphase eines Signals vor Einspeisen in den Hohlraum umfasst, wobei:

   die Kalibrierungsphase des Hohlraums (I) über die Kalibrierungsdauer (T) die folgenden Schritte umfasst:

   - Erzeugen eines ersten digitalen Signals im Zeitbereich vom Typ Dirac-Verteilung (I-1);
   - Umwandeln des ersten Signals in ein zweites analoges Signal, dann Trägertransposition des zweiten Signals in ein drittes analoges Signal und Verstärken des dritten Signals auf dem Frequenzband des Hohlraums in ein viertes analoges Signal (I-2);
   - Einspeisen des vierten Signals in den Hohlraum (I-3); und
   - Messen, Aufzeichnen über die Kalibrierungsdauer (T) und Erlernen über die Kalibrierungsdauer (T) eines fünften analogen Signals, das der Impulsantwort ($H_{cav}(t)$) des Hohlraums entspricht; und Digitalisieren der Impulsantwort ($H_{cav}(t)$) in Form von Abtastungen ($H_{cav}(n)$) mit einer Abtastfrequenz ($F_e$), die die Shannon-Bedingung für die Bandbreite ($[F_{min}; F_{max}]$) des Hohlraums erfüllt (I-4);

   die Zeitumkehrphase (II) des in den Hohlraum eingespeisten Signals über eine Umkehrdauer (T'), die kleiner oder gleich der Kalibrierungsdauer (T) ist, die folgenden Schritte umfasst:

   - Erzeugen eines sechsten umgekehrten digitalen Signals im Zeitbereich ($H_{ret,cav}(n)$), das der Umkehrung des fünften Signals ($H_{cav}(t)$) in seiner digitalisierten Form ($H_{cav}(n)$) entspricht (II-1);
   - Filtern, Trunkieren und digitales Modulieren des sechsten Signals, um ein verbessertes siebtes umgekehrtes digitales Signal ($H'_{ret,cav}(n')$) zu liefern (II-2);
   - Analogumwandlung, Filtern, Beschneiden, Trägertransposition und Verstärken des verbesserten siebten umgekehrten digitalen Signals ($H'_{ret,cav}(n)$), um ein verbessertes achtes umgekehrtes analoges Ansteuersignal ($S_{ret,E,cav}(t)$) am Eingang des Hohlraums zu liefern (II-3);
   - Einspeisen des achten Signals ($S_{ret,E,cav}(t)$) in den Hohlraum (II-4); und
   - Senden eines neunten analogen Signals ($S_{ret,S,cav}(t)$), das der Resultierenden des achten Signals ($S_{ret,E,cav}(t)$) nach Kompression im Hohlraum entspricht, durch den Hohlraum (II-5).

2. Verfahren nach Anspruch 1, wobei die Kalibrierungsphase des Hohlraums (I) weiter einen Schritt des Messens und Erlernens des Hohlraums im Frequenzbereich (I-4a) umfasst:

   - durch Einspeisen, am Eingang, einer Vielzahl von Signalen mit reiner Frequenz, die auf einer Vielzahl von Trägern gesendet werden, welche um einen Frequenzabstand getrennt sind, der kleiner ist als der Kehrwert der Kalibrierungsdauer (T), über die der Hohlraum kalibriert wird, und in einer Anzahl (M), die ausreicht, um eine Bandbreite abzudecken, die um einen Überabtastfaktor größer ist als die Bandbreite des Hohlraums;
   - durch Aufzeichnen der Frequenzantworten ($\hat{H}_{cav}(f_m)$) am Ausgang des Hohlraums für jedes der Signale mit reiner Frequenz auf den Trägern ($f_m$), die am Eingang des Hohlraums eingespeist werden.

3. Verfahren nach einem der Ansprüche 1 oder 2, wobei die Kalibrierungsphasen (I) und der Zeitumkehr (II) des Hohlraums sich weiter auf zusätzliche analoge Elemente der Sendekette erstrecken, die zusammen mit dem Hohlraum eine analoge Untergruppe bilden, wobei:

   - die Kalibrierungsphase (I) zusätzlich zum Hohlraum die zusätzlichen analogen Elemente vor und/oder hinter dem Hohlraum zum Bestimmen der Impulsantworten, die dem fünften Signal ($H_{cav}(t)$) und dessen digitalisierter Form ($H_{cav}(n)$) entsprechen, der analogen Untergruppe berücksichtigt;
   - die Umkehrphase (II) zusätzlich zum Hohlraum die zusätzlichen analogen Elemente vor und/oder hinter dem Hohlraum zum Bestimmen des achten Signals ($S_{ret,E,cav}(t)$), das am Eingang eingespeist wird, der zusätzlichen analogen Elemente vor der analogen Untergruppe berücksichtigt.

4. Verfahren nach einem der Ansprüche 1 bis 3, wobei das fünfte Signal (($H_{cav}(t)$) transponiert und im Basisband abgetastet wird, um ein komplexes digitales Signal ($H_{cav,BB}(n)$) zu erhalten, das um die Nullfrequenz zentriert abgetastet wird, unter Verwendung einer Hilbert-Transformation, einer Tiefpassfilterung und dann einer Abtastung im Basisband mit der Abtastfrequenz (Fe), die die Shannon-Bedingung für die Bandbreite des auf die Nullfrequenz zentrierten Hohlraums erfüllt.

5. Verfahren nach Anspruch 3 oder 4, wobei die Frequenzantwortsignale ($\hat{H}_{cav}(f_m)$) am Ausgang der analogen Untergruppe der Sendekette um die halbe Summe der Grenzen des Frequenzbandes des Hohlraums frequenzverschoben und dann einer inversen FourierTransformation unterzogen werden, um die digitalisierte zeitliche Impulsantwort im Basisband ($H_{cav,BB}(m)$) über die Anzahl von Abtastungen (M) zu erhalten.

6. Verfahren nach Anspruch 4 oder 5, wobei die Zeitumkehrphase (II) eines gesendeten Signals den Schritt (II-1) des digitalen Erzeugens des sechsten umgekehrten komplexen Basisbandsignals ($H_{ret,cav,BB}(n)$ oder $H_{ret,cav,BB}(m)$) umfasst, das der Umkehrung des fünften komplexen Signals ($H_{cav,BB}(n)$, $H_{cav,BB}(m)$) entspricht, das um die Nullfrequenz zentriert abgetastet wurde.

7. Verfahren nach Anspruch 6, wobei die Zeitumkehrphase (II) eines gesendeten Signals einen Schritt (II-2) des Filterns, Trunkierens und digitalen Modulierens des sechsten umgekehrten komplexen Basisbandsignals ($H_{ret,cav,BB}(n)$, $H_{ret,cav,BB}(m)$) umfasst, um ein siebtes vereinfachtes umgekehrtes Basisbandsignal ($H'_{ret,cav,BB}(n')$, $H'_{ret,cav,BB}(m')$) zu liefern.

8. Verfahren nach Anspruch 7, wobei der Schritt (II-2) des Filterns, Trunkierens und digitalen Modulierens des sechsten umgekehrten komplexen Basisbandsignals ($H_{ret,cav,BB}(n)$), um ein siebtes vereinfachtes umgekehrtes Basisbandsignal ($H'_{ret,cav,BB}(n)$) zu liefern, eine Transformation mit quasi konstanter Amplitude oder eine digitale Modulation mit diskreten Phasenzuständen vom Typ BPSK oder QPSK verwendet.

9. Verfahren nach Anspruch 7, wobei der Schritt (II-2) des Filterns, Trunkierens und digitalen Modulierens des sechsten umgekehrten komplexen Basisbandsignals ($H_{ret,cav,BB}(n)$), um ein siebtes vereinfachtes umgekehrtes Basisbandsignal ($H'_{ret,cav,BB}(n)$) zu liefern, eine Transformation mit strikt konstanter Amplitude oder eine digitale Modulation mit kontinuierlichem Phasenzustand vom Typ MSK oder CPM mit 2 oder 4 Zuständen verwendet.

## Claims

1. Method for generating and emitting a high-power signal composed of a plurality of Dirac distribution-type signals, by means of a system for generating and emitting a high-power signal having a reverberant cavity, said method comprising a phase of calibrating the cavity over a calibration period (T) and a time reversal phase for a signal before it is fed into the cavity, wherein:

   the phase of calibrating the cavity (I) over the calibration period (T) comprises the steps of:

   - generating a first digital signal in the Dirac distribution-type time domain (I-1);
   - converting the first signal into a second analogue signal, then performing carrier transposition on the second signal to create a third analogue signal, and amplifying the third signal over the frequency band of the cavity to create a fourth analogue signal (I-2);
   - feeding the fourth signal into the cavity (I-3); and
   - measuring a fifth analogue signal, which corresponds to the pulse response ($H_{cav}(t)$) of the cavity over the calibration period (T), recording said signal over the calibration period (T) and learning it; and digitising the pulse response ($H_{cav}(t)$) in the form of samples ($H_{cav}(n)$) at a sampling frequency ($F_e$) that complies with the Shannon condition for the bandwidth ($[F_{min}; F_{max}]$) of the cavity (I-4);

   the time reversal phase (II) for the signal fed into the cavity over a reversal period (T'), which is less than or equal to the calibration period (T), comprises the steps of:

   - generating, within the time domain, a sixth reversed digital signal ($H_{ret,cav}(n)$) corresponding to the reversal of the fifth signal ($H_{cav}(n)$) in its digitised form ($H_{cav}(n)$) (II-1);
   - filtering, truncating and digitally modulating the sixth signal to produce an improved seventh reversed digital signal ($H'_{ret,cav}(n')$) (II-2);
   - performing analogue conversion, filtering, clipping, carrier transposition and amplification on the improved seventh reversed digital signal ($H'_{ret,cav}(n)$) to produce an improved eighth reversed analogue drive signal ($S_{ret,E,cav}(t)$) at the input of the cavity (II-3);

- feeding the eighth signal ($S_{ret,E,cav}(t)$) into the cavity (II-4); and
- emitting, by the cavity, a ninth analogue signal ($S_{ret,s,cav}(t)$), which corresponds to the resultant of the eighth signal ($S_{ret,E,cav}(t)$) following compression in said cavity (II-5).

2. Method according to claim 1, wherein the cavity calibration phase (I) further comprises a step of measuring and learning the cavity in the frequency domain (I-4a):

- by inputting a plurality of pure-frequency signals emitted on a plurality of carrier signals that are separated by a frequency step that is less than the inverse of the calibration period (T) during which the cavity is calibrated, and in a sufficient number (M) to cover a bandwidth greater than an oversampling factor at the bandwidth of the cavity;
- by recording the frequency responses ($\hat{H}_{cav}(f_m)$) at the output of the cavity for each of the pure-frequency signals on the carrier signals ($f_m$) input into the cavity.

3. Method according to any of claims 1 or 2, wherein the calibration (I) and time reversal (II) phases for the cavity further involve additional analogue elements of the emission chain which form, together with the cavity, an analogue subassembly, in which:

- in addition to the cavity, the calibration phase (I) takes account of the additional analogue elements upstream and/or downstream of the cavity to determine the pulse responses, corresponding to the fifth signal ($H_{cav}(t)$) and its digitised form ($H_{cav}(n)$), of the analogue subassembly;
- in addition to the cavity, the time reversal phase (II) takes account of the additional analogue elements upstream and/or downstream of the cavity to determine the eighth signal ($S_{ret,E,cav}(t)$) input into the additional analogue elements upstream of the analogue subassembly.

4. Method according to any of claims 1 to 3, wherein the fifth signal ($H_{cav}(t)$) is transposed and baseband-sampled to obtain a sampled complex digital signal ($H_{cav,BB}(n)$) centred around the zero frequency, by using a Hilbert transform, low-pass filtering and then baseband sampling at the sampling frequency ($F_e$), which complies with the Shannon condition for the bandwidth of the cavity recentred at the zero frequency.

5. Method according to claim 3 or claim 4, wherein the frequency response signals ($\hat{H}_{cav}(f_m)$) at the output of the analogue subassembly of the emission chain are frequency-shifted by the half-sum of the bounds of the frequency band of the cavity and are then subjected to an inverse Fourier transform to obtain the digitised baseband time pulse response ($H_{cav,BB}(m)$) over the number of samples (M).

6. Method according to claim 4 or claim 5, wherein the time reversal phase (II) for an emitted signal comprises the step (II-1) of digitally generating the complex reversed sixth baseband signal ($H_{ret,cav,BB}(n)$ or $H_{ret,cav,BB}(m)$), which corresponds to the reversal of the sampled complex fifth signal ($H_{cav,BB}(n)$, $H_{cav,BB}(m)$) centred around the zero frequency.

7. Method according to claim 6, wherein the time reversal phase (II) of an emitted signal comprises a step (II-2) of filtering, truncating and digitally modulating the complex reversed sixth baseband signal ($H_{ret,cav,BB}(n)$, $H_{ret,cav,BB}(m)$) to produce a simplified reversed seventh baseband signal ($H'_{ret,cav,BB}(n')$, $H'_{ret,cav,BB}(m')$).

8. Method according to claim 7, wherein the step (II-2) of filtering, truncating and digitally modulating the complex reversed sixth baseband signal ($H_{ret,cav,BB}(n)$) to produce a simplified reversed baseband seventh signal ($H'_{ret,cav,BB}(n)$) uses either a transform at a virtually constant amplitude or a discrete-phase digital modulation of the BPSK or QPSK type.

9. Method according to claim 7, wherein the step (II-2) of filtering, truncating and digitally modulating the complex reversed sixth baseband signal ($H_{ret,cav,BB}(n)$) to produce a simplified reversed baseband seventh signal ($H'_{ret,cav,BB}(n)$) uses either a transform at a completely constant amplitude or 2-level or 4-level MSK or CPM continuous-phase digital modulation.

Figure 1

**Retournement dit « 1 bit » ou « NRZ »**

Consiste à modéliser par un signal analogique « créneaux »
les valeurs positives ou négatives de $H_{ret,cav}(t)$ réel
sur porteuse

Modélisation analogique de type « NRZ »:
$$S_{ret,cav,ana}(t) = + A \leftrightarrow H_{ret,cav}(t) > 0$$
$$S_{ret,cav,ana}(t) = - A \leftrightarrow H_{ret,cav}(t) < 0$$

$H_{cav}(T\text{-}t)$   Zoom Signal retourné réel $H_{cav}(T\text{-}t)$

Amplitude (Volts)

Temps

Zoom Signal retourné modélisé NRZ
bande passante $F_s$

$S_{ret,cav,ana}(t)$

Amplitude (Volts)

$T_s = 1/F_s$

+A
0V
-A

Temps

Puissance      Nyquist 1        Nyquist 2

Bande d'intérêt accessible

Bande d'intérêt voulue

Filtrage passe bas

Temps

0        $F_s/2$        $F_s = 1/T_s$

Puissance hors bande

Fréquence réelle du signal généré

Figure 2

EP 4 531 207 B1

**Figure 3A**

**I — Etalonnage de la cavité sur la durée d'étalonnage T**

**I-1** — Génération d'un premier signal numérique dans le domaine temporel de type distribution de Dirac

**I-2** — Conversion du premier signal en un deuxième signal analogique, puis transposition sur porteuse du deuxième signal en un troisième signal analogique, et amplification du troisième signal sur la bande de fréquences de la cavité en un quatrième signal analogique

**I-3** — Injection du quatrième signal dans la cavité

**I-4** — mesure, enregistrement sur la durée d'étalonnage T et apprentissage d'un cinquième signal analogique correspondant à la réponse impulsionnelle $H_{cav}(t)$ de la cavité sur la durée d'étalonnage T ; et numérisation de la réponse impulsionnelle $H_{cav}(t)$ sous forme d'échantillons $H_{cav}(n)$ indexés de 0 à N-1 à une fréquence d'échantillonnage $F_e$ respectant la condition de Shannon pour la bande passante $[F_{min} ; F_{max}]$ de la cavité

**I-5** — Mesure et apprentissage de la cavité dans le domaine fréquentiel :
par injection en entrée d'une pluralité de signaux à fréquence pure émis sur une pluralité de porteuses séparées d'un pas en fréquence inférieur à l'inverse de la durée d'étalonnage (T) sur laquelle est étalonnée la cavité, et en nombre (M) suffisant pour couvrir une bande passante supérieure d'un facteur de sur-échantillonnage à la bande passante de la cavité ;
par enregistrement des réponses en fréquence ($\hat{H}_{cav}(f_m)$) en sortie de la cavité pour chacun des signaux à fréquence pure sur les porteuses ($f_m$) injectés en entrée de cavité.

Vers II de FIG.3B

15

Retournement temporel du signal injecté dans la cavité sur une durée de retournement $T' \leq T$ — II

génération dans le domaine temporel d'un sixième signal retourné numérique $H_{ret,cav}(n)$ correspondant au retournement du cinquième signal $H_{cav}(t)$ pris sous sa forme numérisée $H_{cav}(n) = H^*_{cav}(N-1-n))$, n variant de 0 à N-1 — II-1

filtrage, troncature et modulation numérique du sixième signal pour délivrer un septième signal retourné numérique amélioré $H'_{ret,cav}(n')$, n' variant de 0 à N'-1, $N' \leq N$ — II-2

conversion analogique, filtrage, écrêtage, transposition sur porteuse et amplification sur porteuse, du septième signal retourné numérisé amélioré $H'_{ret,cav}(n)$, pour délivrer un huitième signal d'attaque retourné analogique amélioré $S_{ret,E,cav}(t)$ en entrée de la cavité — II-3

injection du huitième signal $S_{ret,E,cav}(t)$ dans la cavité — II-4

émission par la cavité d'un neuvième signal analogique $S_{ret,S,cav}(t)$, correspondant à la résultante du huitième signal $S_{ret,E,cav}(t)$ après compression dans ladite cavité — II-5

Figure 3B

EP 4 531 207 B1

16

**RÉFÉRENCES CITÉES DANS LA DESCRIPTION**

**Documents brevets cités dans la description**

- FR 2985384